# EUROPEAN PATENT APPLICATION

(11) **EP 3 932 929 A1**
(43) Date of publication of application: **05.01.2022**
(21) Application number: 20182911.6
(22) Date of filing: 29.06.2020
(51) Int. Cl.: C07G 1/00

(54) **LIGNIN OIL FROM YOUNG PLANTS**

(71) Applicant: Sca Forest Products AB, SE-851 88 Sundsvall (SE)
(72) Inventor: KUGGE, Christian, 85236 Sundsvall (SE); HULTGREN, Anders Edling, 85644 Sundsvall (SE)
(74) Representative: Weiss, Wolfgang

(57) **Abstract**

The present invention relates to the production of bio-oil comprising depolymerized lignin from an annual plant, depolymerized lignin from an energy crop, depolymerized lignin from a young plant and/or depolymerized lignin from a young plant material.

## Description

The present invention relates to the production of bio-oil comprising depolymerized lignin from an annual plant, depolymerized lignin from an energy crop, depolymerized lignin from a young plant and/or depolymerized lignin from a young plant material.

Lignin is one of the two major components of lignocellulose in plants. Structurally it is a class of complex cross-linked phenolic polymers. From an energy point of view lignin has a high C/O ratio and accounts for a substantial proportion of carbon-based energy in lignocellulose. In the past however, lignin has only been considered as by-product of the pulp and paper industry. Only a minor amount of lignin produced by the pulp and paper industry was utilized commercially and the remainder was used as a low-value fuel. Recently, efforts have been made to recover lignin and convert it to bio-oil.

Lignin may be recovered from hardwood, softwood but also from young plants, annual plants or energy crops. For bio-oil production lignin from softwood, such as pine or spruce, or hardwood, such as birch, is used so far. Softwoods have a higher content of lignin as hardwoods.

WO 2017/048163 and WO 2017/048164 describe processes for producing a bio-oil from lignin wherein a composition comprising kraft black liquor and an acidifying agent is treated in a reactor, optionally in the presence of H₂ and/or CO and optionally in the presence of a catalyst, thereby causing depolymerization of lignin in the black liquor composition and recovering a bio-oil comprising said depolymerized lignin.

Further, EP 19156210 describes a process for producing bio-oil from a lignin containing starting material in an up-flow reactor having improved efficacy and/or economic feasibility compared to known processes.

There is, however, still a need to provide further economically feasible methods for the production of a bio-oil comprising depolymerized lignin.

### Summary of the invention

The present invention provides a novel process for producing bio-oil from a lignin-containing starting material comprising a first type of lignin. The first type of lignin is selected from lignin obtained from an annual plant, lignin obtained from an energy crop, lignin obtained from a young plant and/or lignin obtained from a young plant material.

Bio-oil produced from a starting material comprising the first type of lignin has characteristic properties, which distinguish it from bio-oil produced from a starting material comprising a second, i.e. different type of lignin, e.g. lignin from hardwood, softwood and/or eucalyptus.

The present inventors have found that bio-oil produced from the first type of lignin is suitable as carrier liquid for different types of bio-oil, e.g. bio-oils prepared from a second type of lignin. Bio-oil produced from the first type of lignin has an improved viscosity compared to bio-oil produced from a second type of lignin hereby improving the homogeneity and flow properties of bio-oils.

Moreover, providing a lignin-containing composition comprising a mixture of the first and second type of lignin improves the efficacy and/or economic feasibility of a process for producing bio-oil from such a composition compared to a process for producing bio-oil from the second type of lignin only.

A first aspect of the invention relates to a process for producing bio-oil comprising the steps of:
(a) providing a lignin-containing composition having an alkaline pH, e.g. a pH of about 8 to about 14, particularly of about 13, wherein the composition comprises a first type of lignin which is lignin from an annual plant, lignin from an energy crop, lignin from a young plant and/or lignin from young plant material,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin, and optionally comprising the organic diluent.

A second aspect of the invention relates to a bio-oil obtainable by a process of the invention.

A third aspect of the invention relates to a bio-oil obtainable by depolymerization of a first type of lignin which is lignin from an annual plant, lignin from an energy crop, lignin from a young plant and/or lignin from a young plant material as described herein and which is characterized by one or more of the parameters selected from the group consisting of:
(i) the nitrogen content, wherein the nitrogen content is about 1.0% per weight of the sample to about 3.0% per weight of the sample and preferably about 1.5% per weight of the sample to about 2.0% per weight of the sample,
(ii) the hydrogen content, wherein the hydrogen content is about 6.0% per weight of the sample to about 8.0% per weight of the sample and preferably about 6.3% per weight of the sample to about 7.0% per weight of the sample,
(iii) the sulfur content, wherein in the sulfur content is about 0% per weight of the sample to about 2.5% per weight of the sample, preferably about 0.1% per weight of the sample to about 1.5% per weight of the sample and more preferably about 0.5% per weight of the sample to about 1.0% per weight of the sample,
(iv) the number average molecular weight, wherein the number average molecular weight is about 400 Da to about 530 Da, preferably about 450 Da to about 510 Da, more preferably about 480 Da to about 500 Da and most preferably about 490 Da,
(v) the molecular weight at the highest peak of the molecular weight distribution of the bio-oil, wherein the molecular weight at the highest peak is about 500 Da to about 900 Da, more preferably about 600 Da to about 800 Da and most preferably about 700 Da, and
(vi) the viscosity, wherein the viscosity is about 900 Pa s at 100 rpm at 75° C to about 1200 Pa s at 100 rpm at 75° C, preferably about 950 Pa s at 100 rpm at 75° C to about 1100 Pa s at 100 rpm at 75° C.

A fourth aspect of the invention relates to the use of bio-oil of the invention as a carrier for bio-oil produced by depolymerization of lignin from a source different from an annual plant, an energy crop, a young plant and a young plant material.

A fifth aspect of the invention relates to the use of bio-oil of the invention as diluent in a process of producing bio-oil by depolymerization of lignin.

### Brief Description of the Figures

Figure 1: Elemental analysis of lignin oil from the first and second type of lignin.
Figure 2: Relative distribution vs. log Mw for wheat straw lignin oil (squares) and kraft lignin oil (triangles)
Figure 3: Rheogram of wheat straw lignin oil and kraft lignin oil

### Detailed Description

The present invention relates to the production of a bio-oil from a lignin-containing composition comprising a first type of lignin, which is lignin from an annual plant, lignin from an energy crop, lignin from a young plant and/or lignin from young plant material.

*"Lignin from an annual plant"* as used herein relates to lignin from a plant completing its life cycle within one year and then dies. The year might a calendar year or a non-calendar year. For example, an annual plant might be sown in one year and harvested one year after. The life cycle includes the growth of the plant from germination to production of the seeds. Examples for annual plants are wheat, rye, barley, triticale, corn, rice, cannabis or millet.

*"Lignin from an energy crop"* as used herein relates to lignin from a plant, which is mainly grown for the purpose energy production. Typically, an energy crop has been harvested within a time period of up to about 4 years after germination, e.g. about 1 to about 4 years, particularly about 2 to about 3 years. Energy crops can be categorized in woody energy crops and herbaceous energy crops. Examples for plant species useful as source of *"lignin from an energy crop"* are sallow, willow, poplar, cotton or grass.

*"Lignin from a young plant"* as used herein relates to lignin from a plant, which is a fast growing plant. Typically, a young plant has been harvested within a time period of up to about 20 years after germination, e.g. about 5 to about 20 years after germination, particularly about 6 to about 15 years, more particularly about 7 to about 10 years. Examples for plant species useful as source of *"lignin from a young plant"* are bamboo, sallow, willow, poplar, robinia, alder, or birch.

*"Lignin from a young plant material"* as used herein relates to lignin from any fast growing part or tissue from a plant. Typically, a young plant material has been harvested within a time period of up to about 20 years after begin of growth, e.g. about 5 to about 20 years, particularly about 6 to about 15 years, more particularly about 7 to about 10 years. Examples for young plant materials are stems, branches or offsets derived from a plant.

In certain embodiments, the source of the first type of lignin is selected from the group consisting of a cereal plant, particularly wheat, rye, barley, triticale, corn, rice and/or millet, a fiber plant, particularly cotton, bamboo, sallow, cannabis and/or poplar, and any mixture thereof.

According to step (a) of the process according to the aspect of the invention a starting material is provided which is a lignin-containing composition having an alkaline pH, e.g. a pH of about 8 to about 15, a pH of about 9 to about 14, and particularly a pH of about 13.

The pH of the starting material might be adjusted by adding a pH-adjusting agent such as an acid or a base. Preferred pH adjusting agents are bases such as NaOH or KOH.

The lignin-containing composition in step (a) may have an alkali weight content of about 1 weight-% to 5 weight-% alkali, preferably about 1.5 weight-% to about 3 weight-% alkali, and more preferably about 2 weight-% alkali based on the total weight of the composition.

The lignin-containing composition in step (a) may be any suitable lignin-containing composition comprising a first type of lignin which is lignin from an annual plant, lignin from an energy crop, lignin from a young plant and/or lignin from young plant material. In particular embodiments, the lignin is prepared from straw material. *"Straw material"* as used herein relates to dry stalk material of plants, particularly of annual plants and/or energy crops, more particularly of cereal plants or fiber plants.

The lignin in the lignin-containing composition, particularly the first type of lignin may be provided by a sulfur-free pulping process, i.e. a pulping process wherein no sulfur-containing compound is added to the pulp, such as a soda pulping process. A sulfur-free process is advantageous since the amount of sulfur in the lignin is not increased thereby reducing and/or avoiding any desulfurization steps in the further processing of the bio-oil produced from said lignin.

In certain embodiments, the lignin-containing composition in step (a) may comprise a first type of lignin in an amount from about 10 weight-% to about 90 weight-%, from about 20 weight-% to about 80 weight-%, from about 30 weight-% to about 70 weight-%, from about 40 weight-% to about 60 weight-%, and e.g. about 10% to about 50 weight-% based on the total weight of lignin present in the composition.

In certain embodiments, the lignin-containing composition in step (a) may be a lignin-containing composition consisting essentially of the first type of lignin. In such a case, the lignin of first type may constitute at least about 80%, at least about 85%, at least about 90% or at least about 95% of the total lignin in the composition on a weight basis.

In certain embodiments, the lignin in the lignin-containing composition in step (a) consists essentially of or consists of the first type of lignin.

In certain embodiments the lignin-containing composition of step (a) is a black liquor composition.

In certain embodiments, the lignin-containing composition in step (a) may further comprise a second type of lignin, which is lignin from a source different from an annual plant, an energy crop, a young plant and young plant material. For example, the second type of lignin may be from an old plants or an old plant material.

*"Lignin from an old plant"* as used herein relates to a plant which grows slowly, e.g., which has been harvested about 25 years or more after germination, e.g. about 25 to about 200 years, particularly about 50 to about 150 years, more particularly about 80 to about 100 years. Examples for old plants are hardwood, softwood, eucalyptus or any mixture thereof, particularly pine, spruce, larch, pine, maple, birch, oak, ash, lime, elm or beech or any mixture thereof, particularly pine, spruce, or beech or any mixture thereof.

*"Lignin from an old plant material"* as used herein relates to lignin from any part or tissue from a plant which grows slowly, e.g., which has been harvested about 25 years or more after begin of growth, e.g. about 25 to about 200 years, particularly about 50 to about 150 years, more particularly about 80 to about 100 years.

The lignin in the lignin-containing composition, particularly the second type of lignin, in the lignin-containing composition provided in step (a) may be recovered from a papermaking process. For example, the lignin-containing composition may be a kraft lignin, e.g. lignin in a kraft black liquor composition, i.e. a black liquor composition from a kraft pulping process, sulfite pulping process, organosolv bio refinery process and/or ethanol bio refinery process. The lignin-containing composition may also be derived from dissolving a dry lignin in a suitable aqueous solvent, e.g. dry lignin obtained from a lignin extraction process, e.g., the LignoBoost^{™} process, dry lignin from a lignin first bio refinery process and/or a dry lignin from a sugar first bio refinery process.

In certain embodiments, the amount of the second type of lignin in the composition may be from about 10 weight-% to about 90 weight-%, from about 20 weight-% to about 80 weight-%, from about 30 weight-% to about 70 weight-%, from about 40 weight-% to about 60 weight-%, and e.g. about 10 weight-% to about 50 weight-% based on the total weight of lignin present in the composition.

According to the present invention, further components may be added to the lignin containing composition. In certain embodiments, lignin-derived components, e.g. solid lignin powder may be added to the liquid composition in order to increase the lignin content thereof. Different types of lignin powder are available, e.g. as described in WO 2017/48163. On the other hand, the lignin-containing composition may be diluted, e.g. by adding water in order to decrease the lignin content thereof.

In a specific embodiment, the lignin-derived component may be selected from a partially depolymerized lignin oil or a depolymerized and partially hydrotreated, e.g. partly deoxygenated and partly desulfurized oil. For example, lignin-derived components may be added in an amount of about to 100 weight-% based on the Klason lignin content originally present in the composition. Particularly, these compounds may be added in an amount of

If desired, at least one further component, i.e. a non-lignin derived component may be added to the lignin-containing composition e.g. as described in WO 2017/48163. This further component may be selected from a carbonium and/or arenium ion scavenger, a radical scavenger, a lubricant, an oxygen atom transfer agent, a rosin containing oil and any combination thereof. The further component may be added in an amount of up to about 100 weight-%, particularly in an amount of about 10 weight-% to about 100 weight-%, more particularly in an amount of about 5 weight-% to about 30 weight-%, based on the Klason lignin weight content in the lignin-containing composition.

In certain embodiments, the further component may be selected from a fatty acid, particularly a rosin containing oil and more particularly tall oil and any product derived therefrom comprising rosin constituents, particularly resin acids, e.g. abietic acid and/or pimaric acid. For example, the rosin-containing oil may be selected from crude tall oil and fractions of crude tall oil such as tall oil pitch, tall oil rosin, tall oil fatty acids, crude sulphate turpentine and/or any combination thereof.

In certain embodiments, the further component may be a carbonium and/or arenium ion scavenger or a radical scavenger, Examples of carbonium and/or arenium ion scavengers are aromatic hydrocarbons or alcohols such as phenol, 2-naphthol, catechol, methyl catechol, thymol, anisole, guaiacol, cresol, toluene, o-, m-, p-xylene, p-cymene or any combination thereof. Examples of radical scavengers are stilbenoids, such as piceatannol, methylpiceatannol or resveratrol, or any combination thereof. Examples of lubricants are toluene, o-, m-, p-xylene, p-cymene, gasoline, diesel or any combination thereof. Examples of oxygen atom transfer agents are anthraquinone, a tannin, menadione, quercetin or any combination thereof. With regard to these further components specific reference is made to WO 2017/048163.

In certain embodiments, the lignin-containing composition which is provided according to step (a) and passed to the depolymerization reactor according to step (b) may comprises about 1 weight-% to about 20 weight-% of lignin, preferably about 5 weight-% to about 15 weight-% lignin, more preferably about 7 weight-% to about 8 weight-% lignin based on the total weight of the composition.

Further, in certain embodiments, the lignin-containing composition which is provided according to step (a) and passed to the depolymerization reactor according to step (b) may have a Klason lignin content in the range of about 50 g/kg to about 300 g/kg, particularly of about 100 g/kg to about 200 g/kg based on the total volume of the lignin-containing composition. The Klason lignin content may be determined gravimetrically according to the SCAN-CM 71 method (Scandinavian Pulp, Paper and Board Testing Committee).

Step (b) of the process of the invention comprises passing the lignin-containing composition through a reactor under conditions of elevated temperature and elevated pressure, thereby causing depolymerization of the lignin, wherein a bio-oil composition comprising depolymerized lignin is obtained.

The reactor might be a single reactor or a plurality of reactors, preferably 1, 2, 3, 4 or 5 reactors. The use of a plurality of reactors allows for the optimization of the process resulting in an increased quality of the resulting bio-oil, such as an increased amount of depolymerized lignin. For example, the process may be optimized regarding the adjustment of the pH, temperature, pressure and/or residence time within the reactor.

The plurality of reactors is preferably operated in series. In one embodiment, the whole stream of the lignin-containing composition is passed through each of the plurality of the reactors. In another embodiment, a part of the whole stream comprising an intermediate product is recycled back to at least one of the 1, 2, 3 or 4 previous reactors.

The reactor may be operated in an up-flow mode comprising introducing the composition into a lower portion of the reactor, passing the composition through the reactor in an upward direction and removing the composition from an upper portion of the reactor as described in detail in European application EP 19156210 the content of which is herein incorporated by reference.

In this context, the term *"lower portion of the reactor"* particularly refers to a position, which is between the bottom of the reactor and a position, which is about 30% upwards from the bottom of the reactor based on the total height of the reactor. The term *"upper portion of the reactor"* particularly refers to a position, which is between the top of the reactor and a position which is about 30% downwards from the top of the reactor based on the total height of the reactor. In a particular embodiment, the composition may be introduced into the bottom of the reactor, passed through the reactor in an upward direction and removed from the top of the reactor. In a particular embodiment, the reactor is a vertical reactor.

When operating the lignin-depolymerization reactor in an up-flow mode as described above, the maximum running time of the reactor, e.g. the time until occurrence of a significant pressure drop within the reactor of about 10 bar or higher may be extended to several months even in case the reactor is fed with a composition having a dry solid content of 40 weight-% or more. This effect appears to be caused by a reduced deposition of solids within the reactor.

The depolymerization reaction in step (b) is carried out under conditions of elevated temperature and elevated pressure which are suitable for conducting the depolymerization reaction. The term *"elevated temperature"* relates to a temperature which is elevated compared to room temperature and the term *"elevated pressure"* relates to a pressure which is elevated compared to atmospheric pressure. Particularly, the reactor is kept at a temperature between about 150°C and about 350°C, more particularly between about 210°C and about 290°C and at a pressure between about 5 bar and about 180 bar, more particularly between about 15 bar and about 120 bar, optionally in the presence of a gas such as H₂, CO, CO₂, N₂, NH₃, H₂S, moist syngas, mercaptans such as methane thiol, dimethyl sulfide, dimethyl disulfide, SO₂, methane, ethane, propane, butane and any mixture thereof, e.g. in the presence of a reducing gas such as H₂ or H₂/CO, particularly in the presence of H₂, and optionally in the presence of a catalyst.

For the depolymerization of lignin a wide range of catalysts can be used such as a noble metal on a support such as a carbon-based support, e.g. activated carbon, charcoal, graphene, carbon nanotubes, or graphite, or a metal oxide-based support such as alumina, aluminum phosphate, zeolite, hydrotalcite, hydroxyapatite, magnesium oxide, zirconia, titanium dioxide, ceria, chromite or molybdite. Other possible catalysts are transition metals such as V, Cr, Fe, Co, Ni, Cu, Zn, Zr, Nb, Mo and W or transition metal oxides such as NiO on any of the previously mentioned supports, as well as unsupported metal, metal oxide, metal carbide or metal nitride particles wherein the metal is particularly a transition metal such as Ni or Mo, which may be doped with another transition metal. Further unsupported catalysts that are suitable include Co-Mo-S, MoS₂, VS₂, Ni-Mo and Fe-Cu catalysts.

In certain embodiments, the reactor in step (b) is operated with a vertical temperature gradient, more particularly under conditions where a lower temperature is in the lower reactor portion and a higher temperature is in the upper reactor portion. The temperature difference between the lower reactor portion and the upper reactor portion may be between about 5°C and about 60°C, particularly between about 20°C and about 40°C. For example, the reactor may be operated at a temperature at about 220°C at the bottom and about 250°C at the top.

In certain embodiments, the reactor in step (b) is flushed with an aqueous liquid, particularly with water, in suitable intervals, e.g. after an operation period of about 2 days to about 7 days.

After the depolymerization reaction, the composition may be cooled in step (c) to a temperature below the boiling point of an organic extraction agent, which is added in subsequent step (d). The cooling may be performed in a condenser in which gaseous components such as H₂ and other non-condensable gases are removed.

Step (d) optionally comprises adding at least one acidifying agent for pH adjustment, e.g. for adjustment of the pH from about 1 to about 9, particularly from about 4 to about 7, is added to the composition. The acidifying agent may be selected from H₂SO₄, CO₂, SO₂, acidic process water having a pH of about 1 to about 3 or any combination thereof.

Further, step (d) optionally comprises the addition of an organic extracting agent, which is substantially non-miscible with water. In certain embodiments, the extracting agent is a low-boiling polar and/or aromatic solvent which may have a boiling point of at least about 50°C or least about 70°C and up to about 90°C or up to about 120°C under atmospheric pressure. The low-boiling solvent may be selected from esters, ethers, ketones and alcohols, such as ethyl acetate, methyl tetrahydrofuran and isopropyl acetate or any combination thereof.

In certain embodiments, the organic extracting agent may be a lignin-derived oil, e.g. a bio-oil comprising depolymerized lignin, which has been partially hydrotreated, e.g. partially deoxygenated and desulfurized. In further particular embodiments, the extracting agent may be a rosin-containing oil, e.g. a tall oil, including fractions thereof as described above. The invention also encompasses the addition of mixtures of a low-boiling solvent, a lignin-derived oil and/or a rosin-containing oil.

Usually, the organic extracting agent is added in excess to the mass of bio-oil composition, e.g. in an amount of about 50 weight-% or more, e.g. up to about 200 weight-% based on the total weight of the bio-oil composition.

In certain embodiments, step (d) comprises adding at least one acidifying agent and an organic extracting agent.

The acidifying agent and the organic extracting agent may be added substantially simultaneously to the composition thereby reducing and/or completely avoiding undesired foaming. The term *"simultaneous addition"* in this context is particularly to be understood, that both agents are at least partially added within a common time period. The acidifying agent and/or the organic extracting agent may be added at an elevated temperature, e.g. at a temperature of at least about 50°C up to a temperature which is just below the boiling point of the extracting agent.

After step (d) the composition is optionally subjected to a filtering step (e) which may be carried out by passing the composition through a filtration device, e.g. a filtration device having a mesh width of about 50 µm to about 200 µm such as about 70 µm to about 100 µm.

Subsequently in step (f) a phase-separation is carried out. This phase-separation may comprise decanting the oil phase from a further phase, e.g. from an aqueous phase in a separator. The phase-separation may comprise separation the composition into an oil phase and at least one further phase, e.g. a phase comprising solids, particularly non-depolymerized lignin solids, and an aqueous phase comprising dissolved salts. These phases are withdrawn separately from the separator, thereby obtaining an oil phase comprising depolymerized lignin and organic extracting agent. In certain embodiments, the phase separation may be carried out as described in WO 2017/048163 the content of which is herein incorporated by reference.

When the alkaline pH is adjusted with KOH as pH adjusting agent in step (a), the aqueous phase obtained by phase separation in step (f) comprises dissolved K₂SO₄, which might be recovered in a further process as described below. In one embodiment of this process, the lignin-containing composition in step (a) might be a kraft lignin, e.g. lignin in a kraft black liquor composition, i.e. a black liquor composition from a kraft pulping process as described herein. For example, the lignin-containing composition might comprise a second type of lignin as described herein which might be a kraft lignin, e.g. lignin in a kraft black liquor composition, i.e. a black liquor composition from a kraft pulping process as described herein.

The process of the invention might then further comprise the steps of:
f1) separating the aqueous phase from the oil phase and optionally further phases
f2) optionally filtering the aqueous phase,
f3) optionally evaporating the organic extracting agent from step (d),
f4) adding an anti-solvent to the aqueous phase,
f5) separating K₂SO₄ by filtering the phase of step f4),
f6) optionally evaporating the anti-solvent and optionally the organic extracting agent from step (d),
f7) optionally at least partially recycling the anti-solvent to step f4), and
f8) optionally at least partially recycling the organic extracting agent to step d).

The anti-solvent in this process might be an alcohol, preferably methanol, such as raw kraft mill methanol or at least partially purified kraft mill methanol, or ethanol or a mixture thereof. The ratio between the solvent and the aqueous phase in this process might be within a range of about 1:1 to about 1:4, e.g. about 1:2 to about 1:3. The anti-solvent might be at least partially recycled and reused several times

The K₂SO₄ obtainable or obtained by the process as described herein has a purity of at least about 80%, at least about 90%, at least about 95%, at least about 97%, at least about 99%. Alternatively, the K₂SO₄ is substantially free of impurities.

The K₂SO₄ obtainable or obtained by the process as described herein may be used as fertilizer.

Subsequently, a desalting step (g) may be carried out. This step may comprise (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material.

The desalting in step (g) may comprise (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material. This procedure results in an increased removal of undesired components such as salts from the oil phase and in an increased degree of purity of the bio-oil.

The aqueous washing liquid may contain a metal chelator such as EDTA and/or an organic acid such as formic acid, acetic acid, citric acid, oxalic acid and any mixture thereof to bind and remove metal ions such as Na⁺, K⁺ and Ca²⁺ present in the oil phase.

The aqueous washing liquid may be at least partially recycled and reused several times. For example, a larger portion of the aqueous washing liquid may be recycled along with a smaller amount of fresh and salt-lean aqueous phase.

According to step (h) an organic diluent may be added to the oil phase. In certain embodiments, the organic diluent is added in an amount of about 20 to about 100 wt-% based on the weight of the oil phase. In certain embodiments, the organic diluent is a liquid having a lower volatility than a low-boiling organic extracting agent added in step (d). For example, the organic diluent may be selected from solvents, e.g. polar and/or aromatic solvents, having a boiling temperature of more than 100°C under atmospheric pressure such as benzyl alcohol, cresol and/or terpineol including isomers thereof. The organic diluent may also be selected from lignin-derived oils, and/or non-lignin-derived oils, e.g. rosin-containing oils such as tall oil including fractions thereof as described above, and/or terpene-based oils including turpentine, turpentine fractions, and/or oxygenated turpentine.

Evaporation according to step (i) comprises evaporating the low boiling organic extracting agent from step (d) comprised in the oil phase. A higher boiling diluent, which has been added to the composition in step (h), will not be evaporated, but will remain with the oil phase. The organic extracting agent separated from the oil phase may be recycled to step (d). In case only a lignin-derived oil and/or a rosin-containing oil have been added in step (d) as an organic extracting agent, the evaporation step (i) may be omitted.

Step (j) comprises obtaining bio-oil comprising depolymerized lignin and optionally non-evaporated organic extraction agent from step (d) and/or optionally organic diluent from step (h). The depolymerized lignin obtained in step (j) has a weight average molecular weight, which is substantially reduced compared to the weight average molecular weight of a depolymerized lignin added to the reactor in step (b).

Further, the weight average molecular weight of the bio-oil obtained in step (j) may be in the range of about 200 g/mol to about 2500 g/mol, preferably about 250 g/mol to about 2000 g/mol, more preferably about 700 g/mol to about 1500 g/mol, most preferably about 800 g/mol to about 1100 g/mol.

The process for producing bio-oil as described herein may further comprise blending the bio-oil obtained in step (j) with a further bio-oil produced by depolymerization of lignin from a source different from an annual plant, an energy crop, a young plant and a young plant material, and optionally removing organic extracting agent, if present.

In certain embodiments, the bio-oil obtained in step (j) and the further bio-oil is blended in a weight ratio of about 1:10 to about 10:1, e.g. about 1:2 to about 2:1, and particularly about 1:1

In certain embodiments, blending further comprises homogenizing the blend by mixing for about 10 minutes to about 60 minutes, preferably for about 20 minutes at a temperature of about 25°C to about 35°C, preferably of about 30°C.

In certain embodiments, blending comprises drying the blend at an elevated temperature, e.g. at about 15°C to about 30°C, preferably at about 23°C for about 15 hours to about 30 hours, preferably for about 24 hours followed by 70°C to about 90°C, preferably about 80°C for about 15 minutes to about 50 minutes, preferably for about 30 minutes.

In certain embodiments, the organic extracting agent, if present, is at least partially removed, e.g. by evaporation at a pressure of about 50 mbar to about 200 mbar, preferably at about 100 mbar and a temperature in a range of about 20°C to 40°C, preferably about 25°C to about 35°C, more preferably about 30°C. In an embodiment, the organic extracting agent is completely removed.

The resulting bio-oil obtained in step (j) may be further processed to a hydrocarbon product, e.g. by hydrotreatment.

Hydrotreatment may, e.g. involve a treatment in the presence of a reducing gas such as H₂ and/or CO and a hydrotreatment catalyst at an elevated temperature, e.g. at a temperature between about 220°C to about 400°C, particularly between about 270°C and about 350°C. The product resulting from the hydrotreatment is a hydrocarbon product containing only minor amounts of nitrogen, sulfur and/or oxygen, for example 0.1 weight-% or less nitrogen, 0.05 weight-% or less sulfur and 0.2 weight-% or less oxygen. A partially hydrotreated lignin oil may contain, e.g. 0.5 wt% nitrogen, 0.5 wt% sulfur, 77 wt% carbon, 7 wt% hydrogen and 15 wt% oxygen.

Alternatively, hydrotreatment of depolymerized lignin may be carried out in at least two steps. In one embodiment a first partial hydrotreatment is carried out in a first reactor or reactor zone comprising a guard bed and a second final hydrotreatment is carried out in a second reactor or reactor zone comprising a catalyst bed as described in detail in European application EP 19156211 the content of which is herein incorporated by reference.

The hydrocarbon product obtained from the hydrotreatment may be subjected to a phase separation wherein the product is separated into a gaseous phase comprising low boiling components, a liquid hydrocarbon product phase and an aqueous phase. The liquid hydrocarbon product may be subjected to a fractionation based on the boiling temperature. An exemplary hydrotreatment procedure is also described in WO 2017/078582 or in PCT/EP2020/053172 the contents of which are herein incorporated by reference.

In a particular embodiment the process of the invention as described above is operated continuously.

The invention also relates to a bio-oil obtainable by a process as described herein, particularly to a bio-oil, which is obtainable by depolymerization of a first type of lignin which is lignin from an annual plant, lignin from an energy crop and/or lignin from a young plant or young plant material as described herein.

The invention further relates to a bio-oil, which is obtainable by depolymerization of a first type of lignin which is lignin from an annual plant, lignin from an energy crop and/or lignin from a young plant or young plant material and might be characterized by one or more parameters selected from the group consisting of the nitrogen content, the hydrogen content, the sulfur content, the number average molecular weight, the molecular weight at the highest peak of the molecular weight distribution of the bio-oil, and the viscosity.

In one embodiment, the bio-oil which is obtainable by depolymerization of a first type of lignin as described herein is characterized by the nitrogen content, the hydrogen content and/or the sulfur content, particularly the sulfur content.

In another embodiment, the bio-oil, which is obtainable by depolymerization of a first type of lignin as described herein is characterized by the number average molecular weight and/or the molecular weight at the highest peak of the molecular weight distribution of the bio-oil.

In a further embodiment, the bio-oil, which is obtainable by depolymerization of a first type of lignin as described herein is characterized by the viscosity. The nitrogen content of said bio-oil which is obtainable by depolymerization of a first type of lignin as described herein is about 1.0% per weight of the sample to about 3.0% per weight of the sample, preferably about 1.5% per weight of the sample to about 2.0% per weight of the sample.

The hydrogen content of said bio-oil, which is obtainable by depolymerization of a first type of lignin is about 6.0% per weight of the sample to about 8.0% per weight of the sample, preferably about 6.3% per weight of the sample to about 7.0% per weight of the sample.

The sulfur content of said bio-oil, which is obtainable by depolymerization of a first type of lignin is about 0% per weight of the sample to about 2.5% per weight of the sample, preferably about 0.1% per weight of the sample to about 1.5% per weight of the sample, more preferably about 0.5% per weight of the sample to about 1.0% per weight of the sample.

Any conventional method in the art can be used in order to determine the nitrogen content, hydrogen content and sulfur content. Preferably the content is determined by gas chromatography with pyrolysis using a Flash Smart Analyzer (Thermo Scientific) such as described in Example 3.

The number average molecular weight of said bio-oil, which is obtainable by depolymerization of a first type of lignin as described herein is about 400 Da to about 530 Da, preferably about 450 Da to about 510 Da, more preferably about 480 Da to about 500 Da, most preferably about 490 Da.

The number average molecular weight is calculated by dividing the total weight of the sample by the total number of the molecules.

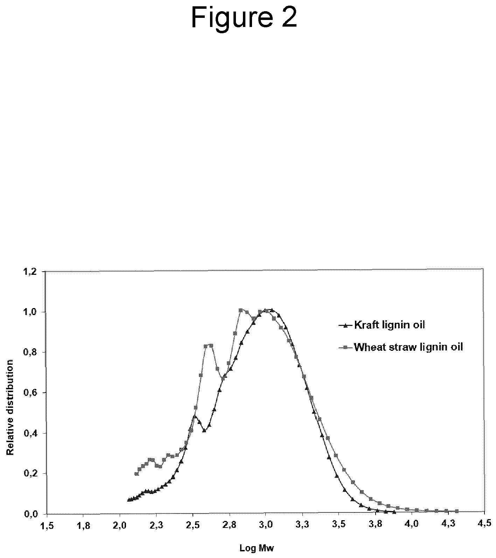

The molecular weight at the highest peak of the molecular weight distribution of said bio-oil, preferably as shown in Figure 2, which is obtainable by depolymerization of a first type of lignin as described herein is about 500 Da to about 900 Da, preferably about 600 Da to about 800 Da, more preferably about 700 Da.

The molecular weight is determined by any conventional method in the art such as colligative property measurements, light scattering techniques, viscometry, size exclusion chromatography and gel permeation chromatography. Preferably, the number average molecular weight is determined by size exclusion chromatography such as size exclusion chromatography, coupled to an UV, Ultraviolet detector (256 nm) as described in Example 4.

The viscosity of said bio-oil, which is obtainable by depolymerization of a first type of lignin as described herein is about 900 Pa s at 100 rpm at 75° C to about 1200 Pa s at 100 rpm at 75° C, preferably about 950 Pa s at 100 rpm at 75° C to about 1100 Pa s at 100 rpm at 75° C.

The viscosity can be determined by any conventional viscometer or rheometer. Preferably the viscosity is measured by a Brookfield CAP 2000+ High torque and spinning head model 02 viscometer as described in Example 5.

In certain embodiments, the bio-oil produced from a first type of depolymerized lignin as described herein is blended with a further bio-oil produced by depolymerization of lignin from a source different from an annual plant, an energy crop, a young plant and young plant material as described herein.

The resulting blend comprises the bio-oil from the first type and of the further bio-oil in a ratio of about 1:10 to about 10:1, of about 1:2 to about 2:1, and preferably about 1:1.

Further, the resulting blend may be characterized by an elemental content selected from the group consisting of a nitrogen content in a range of about 1.0% per weight of the sample to about 1.6% per weight of the sample, preferably about 1.2% per weight of the sample to about 1.5% per weight of the sample, more preferably about 1.3% per weight of the sample, a hydrogen content in a range of about 5.8% per weight of the sample to about 6.4% per weight of the sample, preferably about 5.9% per weight of the sample to about 6.2% per weight of the sample, more preferably about 6.1% per weight of the sample and a sulfur content in a range of about 0.2% per weight of the sample to about 2.5% per weight of the sample, preferably about 1.0% per weight of the sample to about 2.0% per weight of the sample, more preferably about 1.9% per weight of the sample.

The resulting bio-oil as described herein may be used for different applications such as carrier or as diluent for bio-oil produced by depolymerization of lignin from a source different from an annual plant and/or a young plant or as diluent in a process of producing bio-oil by depolymerization of lignin and/or in a process of producing a hydrocarbon product such as bio jet fuel, diesel, naphtha and aromatics .In one embodiment the process of producing a hydrocarbon product is a process of hydrotreatment as described herein.

The present invention is further defined by the following embodiments, which are part of the specification
1. A process for producing bio-oil comprising the steps of:
   (a) providing a lignin-containing composition having an alkaline pH, e.g., a pH of about 8 to about 14, particularly of about 13, wherein the composition comprises a first type of lignin which is lignin from an annual plant, lignin from an energy crop, lignin from a young plant and/or lignin from a young plant material,
   (b) passing the lignin-containing composition through a reactor under conditions of elevated temperature and elevated pressure, thereby causing depolymerization of the lignin, wherein a bio-oil composition comprising depolymerized lignin is obtained,
   (c) optionally cooling the bio-oil composition and removing gaseous components therefrom,
   (d) optionally adding at least one acidifying agent for pH adjustment, and optionally adding at least one organic extracting agent to the bio-oil composition,
   (e) optionally filtering the oil phase,
   (f) obtaining an oil phase from the bio-oil composition by phase-separation, wherein the oil phase comprises depolymerized lignin and optionally an organic extracting agent,
   (g) optionally desalting the oil phase,
   (h) optionally adding an organic diluent to the oil phase,
   (i) optionally evaporating the organic extracting agent comprised in the oil phase, and
   (j) obtaining a bio-oil comprising depolymerized lignin, and optionally comprising the organic diluent.
2. The process of embodiment 1, wherein the lignin in the composition consists essentially of the first type of lignin or consists of the first type of lignin.
3. The process of embodiment 1, wherein the composition further comprises a second type of lignin which is lignin from a source different from an annual plant, an energy crop, a young plant or a young plant material, particularly from an old plant or an old plant material.
4. The process of embodiment 3 wherein the second type of lignin is from a source selected from the group consisting of hardwood, softwood, eucalyptus and any mixture thereof, particularly from pine, spruce, birch or beech and any mixture thereof.
5. The process of embodiment 3 or 4 wherein the second type of lignin is kraft lignin.
6. The process of any one of embodiments 3 to 5 wherein the amount of the second type of lignin in the composition is from about 10 weight-% to about 90 weight-%, from about 20 weight-% to about 80 weight-%, from about 30 weight-% to about 70 weight-%, from about 40 weight-% to about 60 weight-%, and e.g. about 10 weight-% to about 50 weight-% based on the total weight of lignin present in the composition.
7. The process of any one of the preceding embodiments wherein the lignin-containing composition of step (a) is a black liquor composition.
8. The process of any one of the preceding embodiments wherein the first type of lignin in the lignin-containing composition of step (a) is from straw material.
9. The process of any one of the preceding embodiments wherein the first type of lignin in the lignin-containing composition of step (a) is provided by a sulfur-free pulping process, e.g. by soda pulping.
10. The process of any one of the preceding embodiments wherein the source of the first type of lignin is selected from the group consisting of a cereal plant, a fiber plant, and any mixture thereof.
11. The process of embodiment 10 wherein the cereal plant is selected from the group consisting of wheat, rye, barley, triticale, corn, rice and millet, and/or wherein the fiber plant is selected from the group consisting of cotton, bamboo, sallow, cannabis and poplar.
12. The process of any one of the preceding embodiments wherein lignin powder or a lignin derived component is added to the black liquor composition in step (a), particularly in an amount of about 10 weight-% to about 100 weight-%, more particularly in an amount of about 20 weight-% to about 70 weight-% based on the Klason lignin content originally present in the lignin-containing composition.
13. The process of any one of the preceding embodiments wherein at least one further component selected a carbonium and/or arenium ion scavenger, a radical scavenger, or an oxygen atom transfer agent, a rosin containing oil and any combination thereof, particularly in an amount up to about 100 weight-%, more particularly in an amount of about 10 weight-% to about 100 weight-%, most particularly in an amount of about 5 weight-% to about 30 weight-% based on the total Klason lignin content in the lignin-containing composition.
14. The process of any one of the preceding embodiments wherein the lignin-containing composition of step (a) has a pH of about 8 to about 14, particularly of about 13.
15. The process of any one of the preceding embodiments wherein the lignin-containing composition of step (a) has an alkali weight content of about 1 weight-% to 5 weight-% alkali, preferably about 1.5 weight-% to about 3 weight-% alkali, and more preferably about 2 weight-% alkali based on the total weight of the composition.
16. The process of any one of the preceding embodiments wherein the lignin-containing composition provided in step (a) comprises a Klason lignin content of about 50 g/kg to about 300 g/kg, particularly of about 100 g/kg to about 200 g/kg based on the total weight of the composition.
17. The process of any one of the preceding embodiments wherein the lignin-containing composition provided in step (a) comprises about 1 weight-% to about 20 weight-% of lignin, preferably about 5 weight-% to about 15 weight-% lignin, more preferably about 7 weight-% to about 8 weight-% lignin based on the total weight of the composition.
18. The process of any one of the preceding embodiments wherein in step (b) the reactor is kept at a temperature between about 150°C and about 350°C and a pressure between about 5 bar and about 180 bar, optionally in the presence of a gas such as H₂, CO, CO₂, N₂, NH₃, H₂S, moist syngas, mercaptans such as methane thiol, dimethyl sulfide, dimethyl disulfide, SO₂, methane, ethane, propane, butane and any mixture thereof, e.g. in the presence of a reducing gas such as H₂ or H₂/CO and optionally in the presence of a catalyst.
19. The process of any one of the preceding embodiments wherein in step (b) the reactor is operated in an up-flow mode, comprising introducing the composition into a lower portion of the reactor, passing the composition through the reactor in an upward direction and removing the composition from an upper portion of the reactor, wherein the composition is particularly introduced into the bottom of the reactor, passed through the reactor in an upward direction and removed from the top of the reactor.
20. The process of embodiment 19 wherein in step (b) the reactor is operated with a vertical temperature gradient, particularly under conditions where a lower temperature is in the lower reactor portion and a higher temperature is in the upper reactor portion.
21. The process of embodiment 20 wherein the temperature difference between the lower reactor portion and the upper reactor portion is between about 5°C and about 60°C, particularly between about 20°C and about 40°C.
22. The process of any one of the preceding embodiments wherein in step (b) the reactor is flushed with an aqueous liquid, e.g. after an operation period of about 2 to about 7 days.
23. The process of any one of the preceding embodiments wherein in step (c) the bio-oil composition is cooled below the boiling point of the organic extracting solvent to be added in step (d).
24. The process of any one of the preceding embodiments wherein the acidifying agent added in step (d) is selected from H₂SO₄, CO₂, SO₂, acidic process water having a pH of 1-3 or any combination thereof.
25. The process of any one of the preceding embodiments wherein the acidifying agent in step (d) is added in an amount to adjust a pH from about 1 to about 9, particularly from about 4 to about 7.
26. The process of any one of the preceding embodiments wherein the organic extracting agent added in step (d) is substantially non-miscible with water.
27. The process of any one of the preceding embodiments wherein the organic extracting agent added in step (d) is a low boiling organic solvent selected from esters, ethers, ketones and alcohols, e.g. ethyl acetate, methyl tetrahydrofuran and isopropyl acetate or any combination thereof, more particularly from ethyl acetate.
28. The process of any one of the preceding embodiments wherein the organic extracting agent in step (d) is added in excess to the total mass of the composition.
29. The process of any one of the preceding embodiments wherein the acidifying agent and the organic extracting agent are added substantially simultaneously in step (d) to the composition.
30. The process of any one of the preceding embodiments wherein in step (d) the acidifying agent and/or the organic extracting agent are added at an elevated temperature, e.g. at a temperature of about 50°C and up to below the boiling point of the extracting agent.
31. The process of any one of the preceding embodiments wherein in step (e) the composition is passed through a filtration device having a mesh width of about 50 µm to about 200 µm.
32. The process of any one of the preceding embodiments wherein the phase-separation in step (f) comprises separating the bio-oil composition into an oil phase and at least one further phase and decanting the oil phase from the further phase.
33. The process of any one of the preceding embodiments wherein the phase-separation in step (f) comprises separating the bio-oil composition into an oil phase, and at least one further phase, e.g. a first phase comprising solids, particularly non-depolymerized lignin solids, and a second aqueous phase comprising dissolved salts.
34. The process of any one of the preceding embodiments wherein desalting in step (g) comprises (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material, wherein the aqueous washing liquid may comprise a metal chelator and/or an organic acid.
35. The process of embodiment 33 wherein desalting in step (g) comprises
   (i) contacting the oil phase with an aqueous washing liquid and carrying out a phase-separation wherein the resulting mixture is separated into an oil phase and at least one aqueous phase, and subsequently (ii) contacting the composition with an adsorbent and/or an ion exchange material, wherein the aqueous washing liquid may comprise a metal chelator and/or an organic acid.
36. The process of embodiments 34 or 35 wherein the aqueous washing liquid is at least partially recycled and reused several times.
37. The process of any one of the preceding embodiments wherein the organic diluent added in step (h) is a liquid having a higher boiling point than a low-boiling extracting agent added in step (d).
38. The process of embodiment 36 wherein the organic diluent is selected from benzyl alcohol, cresol, terpineol including isomers thereof, a lignin-derived oil, or any combination thereof.
39. The process of any one of the preceding embodiments wherein the organic extracting agent is recycled to step (d) after evaporation in step (i).
40. The process of any one of the preceding embodiments wherein the bio-oil obtained in step (j) has a weight average molecular weight in a range of about 200 g/mol to about 2500 g/mol, preferably about 250 g/mol to about 2000 g/mol, more preferably about 700 g/mol to about 1500 g/mol, most preferably about 800 g/mol to about 1100 g/mol.
41. The process of any one of the preceding embodiments further comprising blending the bio-oil obtained in step (j) with a further bio-oil produced by depolymerization of lignin from a source different from an annual plant, an energy crop, and a young plant or young plant material, and optionally removing organic extracting agent, if present.
42. The process of embodiment 41 wherein the bio-oil obtained in step (j) and the further bio-oil are blended in a weight ratio of about 1:10 to about 10:1, of about 1:2 to about 2:1, and preferably about 1:1.
43. The process of any one of embodiments 41 or 42 wherein the organic extracting agent is at least partially removed by evaporation at a pressure of about 50 mbar to about 200 mbar, preferably at about 100 mbar and a temperature in a range of about 20°C to 40°C, preferably about 25°C to about 35°C, more preferably about 30°C.
44. The process of any one of embodiments 41 to 43 further comprising homogenizing the blend by mixing for about 10 minutes to about 60 minutes, preferably for about 20 minutes at a temperature of about 25°C to about 35°C, preferably of about 30°C.
45. The process of any of embodiments 41 to 44 further comprising drying the blend at an elevated temperature, e.g. at about 15°C to about 30°C, preferably at about 23°C for about 15 hours to about 30 hours, preferably for about 24 hours followed by 70°C to about 90°C, preferably about 80°C for about 15 minutes to about 50 minutes, preferably for about 30 minutes.
46. The process of any one of the preceding embodiments wherein the bio-oil obtained according to of any one of embodiments 1 to 40 or the blend of bio-oils obtained in step (j) of embodiments 41 to 45 is further processed to a hydrocarbon product.
47. The process of embodiment 46 wherein the bio-oil is subjected to hydrotreatment.
48. The process of embodiment 47 wherein the hydrotreatment comprises a treatment in the presence of a reducing gas such as H₂ and/or CO and a hydrotreatment catalyst at a temperature between about 220°C to about 400°C, particularly between about 270°C and about 350°C.
49. The process of embodiment 47 or 48 wherein the hydrocarbon product obtained from the hydrotreatment is subjected to a phase-separation wherein the product is separated into a gaseous phase, a liquid hydrocarbon product phase and an aqueous phase.
50. The process of embodiment 49 wherein the liquid hydrocarbon product is subjected to a fractionation.
51. The process of any one of the preceding embodiments, which is operated continuously.
52. A bio-oil obtainable by a process according to any of embodiments 1 to 40.
53. A bio-oil which is obtainable by depolymerization of a first type of lignin which is lignin from an annual plant, lignin from an energy crop, lignin from a young plant and/or lignin from a young plant material by a process according to any one of embodiments 1 to 40.
54. A bio-oil, which is obtainable by depolymerization of a first type of lignin which is lignin from an annual plant, lignin from an energy crop, lignin from a young plant and/or lignin from a young plant material and which is characterized by one or more of the parameters selected from the group consisting of the nitrogen content, the hydrogen content, the sulfur content, the number average molecular weight, the molecular weight at the highest peak of the molecular weight distribution of the bio-oil and the viscosity.
55. The bio-oil of embodiment 54 characterized by the nitrogen content, the hydrogen content and/or the sulfur content, particularly the sulfur content.
56. The bio-oil of embodiment 54 characterized by the number average molecular weight and/or the molecular weight at the highest peak of the molecular weight distribution of the bio-oil.
57. The bio-oil of embodiment 54 characterized by the viscosity.
58. The bio-oil of any one of the embodiments 54 to 57 characterized by
   (i) the nitrogen content, wherein the nitrogen content is about 1.0% per weight of the sample to about 3.0% per weight of the sample and preferably about 1.5% per weight of the sample to about 2.0% per weight of the sample,
   (ii) the hydrogen content, wherein the hydrogen content is about 6.0% per weight of the sample to about 8.0% per weight of the sample and preferably about 6.3% per weight of the sample to about 7.0% per weight of the sample,
   (iii) the sulfur content, wherein in the sulfur content is about 0% per weight of the sample to about 2.5% per weight of the sample, preferably about 0.1% per weight of the sample to about 1.5% per weight of the sample and more preferably about 0.5% per weight of the sample to about 1.0% per weight of the sample,
   (iv) the number average molecular weight, wherein the number average molecular weight is about 400 Da to about 530 Da, preferably about 450 Da to about 510 Da, more preferably about 480 Da to about 500 Da and most preferably about 490 Da,
   (v) the molecular weight at the highest peak of the molecular weight distribution of the bio-oil, wherein the molecular weight at the highest peak is about 500 Da to about 900 Da, more preferably about 600 Da to about 800 Da and most preferably about 700 Da, and
   (vi) the viscosity, wherein the viscosity is about 900 Pa s at 100 rpm at 75° C to about 1200 Pa s at 100 rpm at 75° C, preferably about 950 Pa s at 100 rpm at 75° C to about 1100 Pa s at 100 rpm at 75° C.
59. The bio-oil of any one of embodiments 52 to 58 wherein the depolymerized lignin comprised in the bio-oil consists essentially of lignin or consists of lignin from an annual plant, depolymerized lignin from an energy crop, depolymerized lignin from a young plant and/or depolymerized lignin form a young plant material.
60. The bio-oil of any one of embodiments 52 to 59, which is blended with a further bio-oil produced by depolymerization of lignin from a source different from an annual plant, an energy crop, a young plant and young plant material.
61. The bio-oil of embodiment 60, which comprises the bio-oil obtainable from a first type of lignin, which is lignin from an annual plant, lignin from an energy crop, lignin from a young plant and/or lignin from a young plant material and the further bio-oil produced by depolymerization of lignin from a source different from an annual plant, an energy crop, a young plant and young plant material in a ratio of about 1:10 to about 10:1, of about 1:2 to about 2:1, and preferably about 1:1.
62. The bio-oil of embodiment 60 which is characterized by a nitrogen content in a range of about 1.0 % per weight of the sample to about 1.6% per weight of the sample, preferably about 1.2% per weight of the sample to about 1.5% per weight of the sample, more preferably about 1.3% per weight of the sample, a hydrogen content in a range of about 5.8% per weight of the sample to about 6.4% per weight of the sample, preferably about 5.9% per weight of the sample to about 6.2% per weight of the sample, more preferably about 6.1% per weight of the sample and a sulfur content in a range of about 0.2% per weight of the sample to about 2.5% per weight of the sample, preferably about 1.0% per weight of the sample to about 2.0% per weight of the sample, more preferably about 1.9% per weight of the sample.
63. Use of the bio-oil of any one of embodiments 52 to 59 as a carrier for bio-oil produced by depolymerization of lignin from a source different from an annual plant, an energy crop, a young plant and young plant material and/or in a process of producing a hydrocarbon product.
64. Use of the bio-oil of any one of embodiments 52 to 59 as a diluent in a process of producing bio-oil by depolymerization of lignin and/or in a process of producing a hydrocarbon product.

### Examples

### Example 1

1.6 g of NaOH was added to 200 g 45 °C warm straw black liquor to reach pH 13.2 prior heat treatment at 230 °C for 1 h. The pH of black liquor after heat treatment was 8.6. Additional acidification was performed by adding sulfuric acid to bring pH to 4.5 prior adding solvent ethyl acetate. Residual solids were filtered off before allowing a 2-phase separation of the solvent and aqueous phase. After decanting the solvent phase containing lignin the solvent were recovered by evaporation giving a bio-oil yield of 38%.

### Example 2

4.35 g of bio-oil produced with known processes was mixed with 4.35 g of bio-oil from straw there both feeds were pre-evaporated 30 min at 100 mbar to remove most of the solvent ethyl acetate. The two bio-oils were homogenized for 20 minutes at 30 °C and 400 mbar. The resulting homogenous bio-oil was dried for 24 h at 23 °C in open air followed by 30 minutes heating at 80 °C in order to remove all solvent. The bio-oil was left to dry another 24 h at 23 °C in open air prior a flow property test at 50 °C which shows a homogenous bio-oil with flow properties similar to a Rufus bio-oil containing 30% ethyl acetate. The final oil weight was 6.19 g, which means a 29% loss of ethyl acetate.

### Example 3

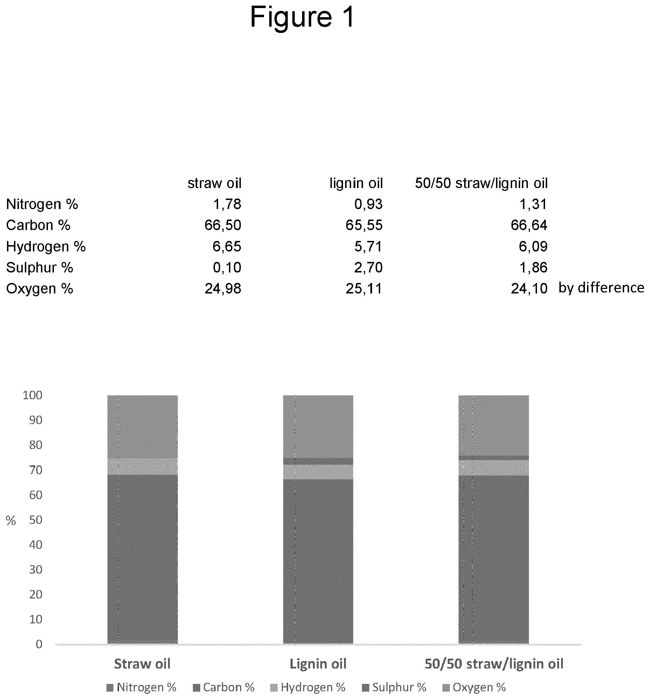

Elemental analysis of three lignin oil samples has been conducted in order to characterize lignin oil from first and second type of lignin. The results are presented in the table and diagram in Figure 1. The elemental analysis method is described as "Organic Elemental analysis with FlashSmart from Thermo Scientific".

Nitrogen, carbon, hydrogen and sulfur are measured values, oxygen is calculated according the equation oxygen=100-N-C-H-S. The 50/50 straw/lignin oil sample is a mixture of the straw oil and the lignin oil.

The straw lignin oil (indicated as straw oil in Figure 1) contains higher values of nitrogen and hydrogen as well as substantially lower amounts of sulfur compared to the standard lignin oil made from kraft black liquor (indicated as lignin oil in Figure 1). The differences in sulfur and nitrogen content is assessed to be significant. Lower concentration of sulfur is positive since it lowers the hydrogen gas consumption and the emissions of H₂S during the final conversion process to hydrocarbons. Without being bound to any theory, it is believed that the large difference in the sulfur content comes from the origin of the lignin. Since the lignin used for producing the lignin oil is from black liquor from the kraft process, higher amounts of sulfur are expected. If the straw lignin used for producing the straw oil would be derived from straw black liquor from the kraft process, a similar sulfur content of the straw lignin oil could be expected.

The calculated oxygen content is for the straw oil and the lignin oil is similar, and for the 50/50 straw/lignin oil sample approximately 1% lower.

### Example 4

The lignin oils were analyzed by SEC, Size Exclusion Chromatography, coupled to an UV, Ultraviolet detector (256 nm). The system was calibrated with polystyrene sulfonate standards with known molecular weights (122-679 000 Da). The column SB-804 HQ, SB-803 HQ and SB-802.5 HQ together with a pre-column from Shodex was used for the HPLC-analysis together with a borate buffer with 10 % methanol set at pH 10.3 as eluent. A smaller amount (approximately 30 mg) of the samples was initially dissolved in 0.5 ml 1M NaOH. The lignin oils were dissolved fully (visual judgement). The lignin oils were then diluted in the HPLC-eluent, pH adjusted with 1M H₂SO₄ to pH 10 and filtered through a 0.45 µm filter prior to analysis. The samples remained fully dissolved also after dilution and adjustment of pH.

Figure 2 compares the molecular weight of the wheat straw lignin oil with the kraft lignin oil. These data indicates that the wheat straw lignin oil have more and larger peaks of lignin fragments below the maximum peak than the kraft lignin oil. However, the wheat lignin oil show a larger molecular weight tail beyond 2500 Da which makes the weight average molecular weight to be very similar, 980 Da for wheat straw lignin oil and 970 Da for kraft lignin oil. Both the number average molecular weight and the molecular weight at the highest peak is lower for the wheat straw lignin oil. The number average molecular weight for wheat lignin oil is 490 Da (11% lower) and for the kraft lignin oil 550 Da. The molecular weight at the highest peak is 700 Da for the wheat straw lignin oil and 1080 for the kraft lignin oil. These data suggests a lower viscosity for the wheat straw lignin oil compared with kraft lignin oil.

### Example 5

The lignin oil was dried to a powder in an oven at 105 °C overnight to make samples equal from start. One part (by weight) ethyl acetate and 0.5 part benzyl alcohol was added to the dried lignin oil. The lignin powder was dissolved by stirring and boiling off the ethyl acetate at its boiling point (77 °C) leaving a thick lignin oil behind containing benzyl alcohol. Following this, a viscometer (Brookfield CAP 2000+ High torque and spinning head model 02) was used to measure viscosity at 75 °C and at different rotating speeds when possible.

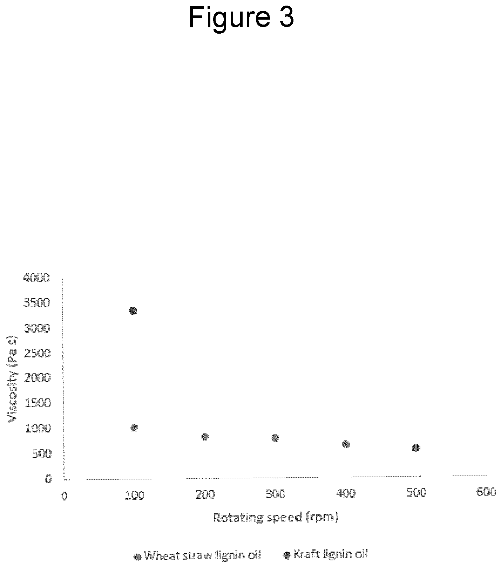

Samples analyzed and shown in Figure 3 had a lignin powder dissolving time of 15 minutes. The ethyl acetate boiling off time was 20 minutes for wheat straw lignin oil. This gave viscosity data over the rotational speed range of 100 - 500 rpm. The kraft lignin oil had a too high viscosity to be able to be measured when the ethyl acetate boiling off time was 20 minutes. By reducing this time to 7 minutes the viscometer was able to measure viscosity only at one rotational speed of 100 rpm.

Figure 3 shows that the viscosity for the kraft lignin oil is more than 3 times higher despite a shorter boiling off period of ethyl acetate.

This indicates that the wheat straw lignin is more depolymerized than the kraft lignin oil. A following remark is that a blend of these oils provides an improved processability as the average viscosity will be lowered.

### Example 6

11.8 g KOH was dissolved in 150 g deionized water. Following this, 30.5 g lignin powder was dissolved in the alkaline water during stirring. This provides an alkaline lignin containing composition with 15 wt% lignin and 6 wt% KOH. The lignin containing composition was stirred and heated to 250 °C, which takes 50 minutes and then kept at 250 °C for 1 hr. The reactor was cooled down and the lignin containing composition was acidified using concentrated sulfuric acid. The lignin containing composition and acid was both pumped to a beaker to where liquids were mixed by mechanical stirring. The pH of the mixture was kept constant at 4.5.

After acidification, 500 ml ethyl acetate solvent was added to the mixture and vigorously stirred for 3 minutes prior allowing the mixture to settle and phase separate. The phase separation results in a 3-phase separation with solvent and lignin oil on top and a solid middle phase, which was filtered off enabling a 2-phase separation of lignin oil/solvent and water.

The solvent phase (including the lignin oil) on top of water was decanted off the beaker and solvent was recovered at 30 °C and 100 mbar giving a final lignin oil. Lignin oil yield was 78%.

The filtered lignin solids was dried in an oven at 105 °C overnight giving 6.5 g solids containing 11 % ash.

The filtered water phase was evaporated to recover dissolved ethyl acetate. 40 g of the resulting water phase containing dissolved K₂SO₄ was processed further by adding an anti-solvent like methanol or ethanol to precipitate K2SO4. This gave 2 g dry K₂SO₄ with high purity, 99% using methanol and 97% using ethanol. The alcohol within the filtrated liquid was recovered by evaporation enabling recirculation of alcohol.

## Claims

1. A process for producing bio-oil comprising the steps of:
(a) providing a lignin-containing composition having an alkaline pH, e.g. a pH of about 8 to about 14, particularly of about 13, wherein the composition comprises a first type of lignin which is lignin from an annual plant, lignin from an energy crop, lignin from a young plant and/or lignin from young plant material,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin, and optionally comprising the organic diluent.

2. The process of claim 1, wherein the lignin in the composition consists essentially of the first type of lignin or consists of the first type of lignin.

3. The process of claim 1, wherein the composition further comprises a second type of lignin which is lignin from a source different from an annual plant, an energy crop, a young plant or a young plant material, particularly from an old plant or old plant material,
wherein the second type of lignin may be from a source selected from the group consisting of hardwood, softwood, eucalyptus and any mixture thereof, particularly from pine, spruce, birch or beech and any mixture thereof.

4. The process of claim 3 wherein the amount of the second type of lignin in the composition is from about 10 weight-% to about 90 weight-%, from about 20 weight-% to about 80 weight-%, from about 30 weight-% to about 70 weight-%, from about 40 weight-% to about 60 weight-%, and e.g. about 10 weight-% to about 50 weight-% based on the total weight of lignin present in the composition.

5. The process of any one of the preceding claims wherein the first type of lignin in the lignin-containing composition of step (a) is from straw material.

6. The process of any one of the preceding claims wherein the first type of lignin in the lignin-containing composition of step (a) is provided by a sulfur-free pulping process, e.g. by a soda pulping process.

7. The process of any one of the preceding claims wherein the source of the first type of lignin is selected from the group consisting of a cereal plant, a fiber plant, and any mixture thereof,
wherein the cereal plant is selected from the group consisting of wheat, rye, barley, triticale, corn, rice and millet, and/or
wherein the fiber plant is selected from the group consisting of cotton, bamboo, sallow, cannabis and poplar.

8. The process of any one of the preceding claims wherein the lignin-containing composition of step (a) has an alkali weight content of about 1 weight-% to 5 weight-% alkali, preferably about 1.5 weight-% to about 3 weight-% alkali, and more preferably about 2 weight-% alkali based on the total weight of the composition, and/or
wherein the lignin-containing composition provided in step (a) comprises about 1 weight-% to about 20 weight-% of lignin, preferably about 5 weight-% to about 15 weight-% lignin, more preferably about 7 weight-% to about 8 weight-% lignin based on the total weight of the composition.

9. The process of any one of the preceding claims wherein the bio-oil obtained in step (j) has a weight average molecular weight in a range of about 200 g/mol to about 2500 g/mol, preferably about 250 g/mol to about 2000 g/mol, more preferably about 700 g/mol to about 1500 g/mol, most preferably about 800 g/mol to about 1100 g/mol.

10. The process of any one of the preceding claims further comprising blending the bio-oil obtained in step (j) with a further bio-oil produced by depolymerization of lignin from a source different from an annual plant, an energy crop, a young plant, and a young plant material, and optionally removing organic extracting agent, if present,
wherein the bio-oil obtained in step (j) and the further bio-oil are blended in a weight ratio of about 1:10 to about 10:1, of 1:2 to about 2:1, and preferably of about 1:1.

11. The process of claim 10 wherein the organic extracting agent is removed by evaporation at a pressure of about 50 mbar to about 200 mbar, preferably at about 100 mbar and a temperature in a range of about 20°C to 40°C, preferably about 25°C to about 35°C, more preferably about 30°C.

12. The process of any one of claims 10 to 11 further comprising homogenizing the blend by mixing for about 10 minutes to about 60 minutes, preferably for about 20 minutes at a temperature of about 25°C to about 35°C, preferably of about 30°C, and/or
drying the blend at an elevated temperature, e.g. at about 15°C to about 30°C, preferably at about 23°C for about 15 hours to about 30 hours, preferably for about 24 hours followed by 70°C to about 90°C, preferably about 80°C for about 15 minutes to about 50 minutes, preferably for about 30 minutes.

13. A bio-oil which is obtainable by depolymerization of a first type of lignin which is lignin from an annual plant, lignin from an energy crop, lignin from a young plant and/or lignin from a young plant material by a process according to any one of claims 1 to 12.

14. The bio-oil of claim 13 which is **characterized by** one or more of the parameters selected from the group consisting of:
(i) the nitrogen content, wherein the nitrogen content is about 1.0% per weight of the sample to about 3.0% per weight of the sample and preferably about 1.5% per weight of the sample to about 2.0% per weight of the sample,
(ii) the hydrogen content, wherein the hydrogen content is about 6.0% per weight of the sample to about 8.0% per weight of the sample and preferably about 6.3% per weight of the sample to about 7.0% per weight of the sample,
(iii) the sulfur content, wherein in the sulfur content is about 0% per weight of the sample to about 2.5% per weight of the sample, preferably about 0.1% per weight of the sample to about 1.5% per weight of the sample and more preferably about 0.5% per weight of the sample to about 1.0% per weight of the sample,
(iv) the number average molecular weight, wherein the number average molecular weight is about 400 Da to about 530 Da, preferably about 450 Da to about 510 Da, more preferably about 480 Da to about 500 Da and most preferably about 490 Da,
(v) the molecular weight at the highest peak of the molecular weight distribution of the bio-oil, wherein the molecular weight at the highest peak is about 500 Da to about 900 Da, more preferably about 600 Da to about 800 Da and most preferably about 700 Da, and
(vi) the viscosity, wherein the viscosity is about 900 Pa s at 100 rpm at 75° C to about 1200 Pa s at 100 rpm at 75° C, preferably about 950 Pa s at 100 rpm at 75° C to about 1100 Pa s at 100 rpm at 75° C.

15. The bio-oil of any one of claims 13 or 14 which is blended with a further bio-oil produced by depolymerization of lignin from a source different from an annual plant, an energy crop, a young plant and a young plant material.

16. Use of the bio-oil of any one of claims 13 or 14 as a carrier for bio-oil produced by depolymerization of lignin from a source different from an annual plant, an energy crop, a young plant and young plant material and/or as diluent in a process of producing bio-oil by depolymerization of lignin and/or in a process of producing a hydrocarbon product.
